# EUROPEAN PATENT APPLICATION

(11) **EP 3 643 483 A1**
(43) Date of publication of application: **29.04.2020**
(21) Application number: 19201990.9
(22) Date of filing: 08.10.2019
(51) Int. Cl.: B29C 65/08, B29C 65/36, B29C 65/78, B65B 51/22, B65B 51/30, B65B 57/02, B65B 59/00, B65B 59/02

(54) **A SEALING SYSTEM FOR SEALING A PACKAGING MATERIAL**

(30) Priority: 24.10.2018 EP 18202269
(71) Applicant: Tetra Laval Holdings & Finance S.A., 1009 Pully (CH)
(72) Inventor: Soci, Fabio, 41125 Modena (IT); Gentili, Luca, 63100 Ascoli Piceno (IT); Sighinolfi, Fabrizio, 41015 Nonantola (IT); Casini, Giulio, 50026 San Casciano V.P. (FI) (IT)
(74) Representative: Tetra Pak - Patent Attorneys SE

(57) **Abstract**

A sealing system (100) for sealing a packaging material is disclosed comprising an independently movable sealing device (101) being movably mounted on a track (102), a power generator (105) in communication with the sealing device (101) to supply a power signal (p₁) at a frequency for said sealing over a power communication line (106), the sealing device (101) comprising a housing (107), a detection device (108) arranged in the housing (107) to register detection data of an environment therein and/or of sealing parameters associated with said sealing, and a transmitter (109) connected to the detection device (108), the transmitter comprising an encoder (110) to convert the detection data to at least one frequency pulse (p₂), whereby the transmitter (109) communicates the at least one frequency pulse as a detection signal to a receiver (111) over the power communication line (106).

## Description

### Technical Field

The present invention generally relates to condition monitoring in the field of packaging container manufacturing. More specifically, the present invention relates to a sealing system comprising an independently movable sealing device for sealing a packaging material for such packaging containers and a related method.

### Background

Condition monitoring of machine components in production lines, such as in the manufacturing of sealed packages in a filling machine or related systems, is critical for ensuring a desired functionality over a period of time. The packaging containers undergo a sequence of operations executed in the production line. For example, different sealing operations are carried out where opposed sides of packaging material is compressed together and sealed tight in order to form the final packaging container. Different sealing methods are used for such sealing, such as inductive sealing or ultrasonic sealing. Careful monitoring of production parameters in such sealing operations is desirable in order to optimize the process and attaining a high quality of the packaging containers. A problem with previous techniques is the lack of reliable and resource efficient monitoring of sealing operations being implemented in more complex packaging machine systems in the production line. For example, conveyor systems based on linear motor technology have been proposed for manipulating packaging containers in the production line. These conveyor systems typically comprise a closed loop track, and a plurality of movable objects or carts, which are independently moved along the track by individually controlling a plurality of solenoids along the track. The independently movable carts are controlled to engage the packaging containers in various operations, such as sealing operations. The implementation of sealing systems in such conveyor system increase the challenges in maintaining an accurate monitoring of the production parameters. A problem with previous solutions is an increased complexity of the system, which requires more resources and maintenance. The increased demand on maintenance as well as the increase in complexity of the sealing system may also risk lower the throughput of the production line.

### Summary

It is an object of the invention to at least partly overcome one or more limitations of the prior art. In particular, it is an object to provide an improved sealing system for sealing a packaging material in a packaging machine, in particular allowing for facilitating condition monitoring of the sealing operations, and in particular when implemented in conveyor systems comprising a plurality independently movable carts along a track. It is an object to provide a related method for condition monitoring in such sealing system.

In a first aspect of the invention, this is achieved by a sealing system for sealing a packaging material in a packaging machine, comprising an independently movable sealing device being movably mounted on a track, a controller in communication with the independently movable sealing device to control the position thereof along a path of the track, a power generator in communication with the sealing device to supply a power signal at a frequency for said sealing over a power communication line, wherein the sealing device comprises a housing, a detection device arranged in the housing to register detection data of an environment therein and/or of sealing parameters associated with said sealing, and a transmitter connected to the detection device, the transmitter comprising an encoder to convert the detection data to at least one frequency pulse, whereby the transmitter communicates the at least one frequency pulse as a detection signal to a receiver over the power communication line, and a control monitor connected to the receiver to monitor the detection signal received from the sealing device over the power communication line at positions of the sealing device along the path.

In a second aspect of the invention, this is achieved by a method in a sealing system, the system comprising an independently movable sealing device for sealing a packaging material and being movably mounted on a track, the method comprising supplying a power signal to the sealing device at a frequency for said sealing over a power communication line, registering detection data of the sealing device, converting the detection data to at least one frequency pulse, transmitting the at least one frequency pulse as a detection signal over the power communication line, receiving the at least one frequency pulse, and monitoring the detection signal received from the sealing device over the power communication line at positions of the sealing device along the path.

In a third aspect of the invention, this is achieved by computer program product comprising instructions which, when the program is executed by a computer, cause the computer to carry out the steps of the method according to the second aspect.

In a fourth aspect of the invention, this is achieved by a packaging machine comprising a system according to the first aspect, and/or a packaging machine performing the method according to the second aspect.

Further examples of the invention are defined in the dependent claims, wherein features for the first aspect may be implemented for the subsequent aspects, and vice versa.

Converting detected data of an environment in the sealing device, and/or of its associated sealing parameters, to at least one frequency pulse which is communicated over a power communications line, over which the sealing device is powered, provides for a facilitated real-time condition monitoring of a sealing device when being independently movable along a track of a conveyor system.

Still other objectives, features, aspects and advantages of the invention will appear from the following detailed description as well as from the drawings.

### Drawings

Embodiments of the invention will now be described, by way of example, with reference to the accompanying schematic drawings.
Fig. 1 is a schematic illustration of a sealing system for sealing a packaging material in a packaging machine;
Fig. 2 is a diagram showing an example of a power signal (p₁) supplied to a sealing device and a subsequent frequency pulse (p₂) transmitted from the sealing device;
Fig. 3 is a diagram showing an example of the power supplied to a transmitter of the sealing device;
Fig. 4 is a diagram showing an example of data transmission from the sealing device;
Fig. 5 is a diagram showing an example of recorded events when registering and transmitting detection data from the sealing device;
Figs. 6a-b are schematic illustrations of a sealing device; and
Figs. 7a-b are flowcharts of methods in a sealing system.

### Detailed Description

Embodiments of the invention will now be described more fully hereinafter with reference to the accompanying drawings, in which some, but not all, embodiments of the invention are shown. The invention may be embodied in many different forms and should not be construed as limited to the embodiments set forth herein.

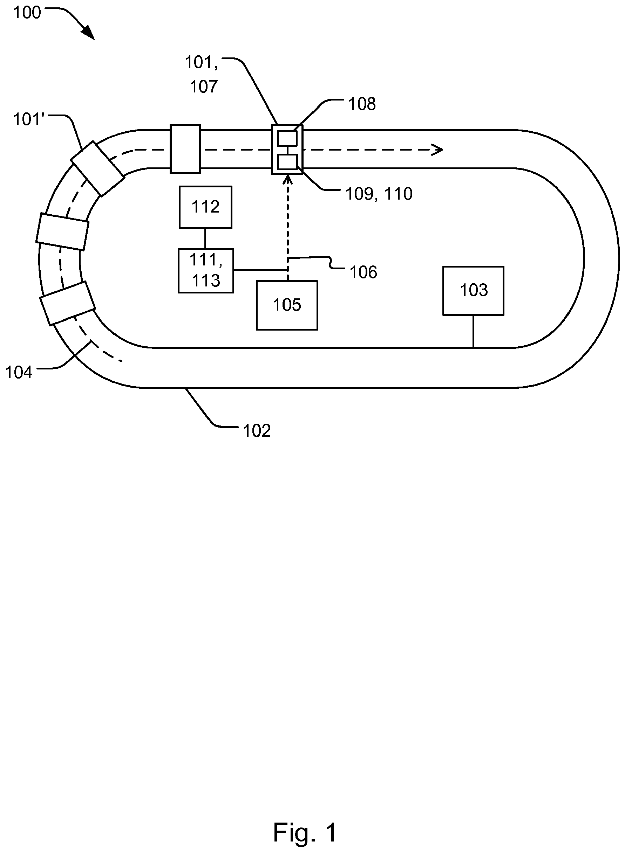

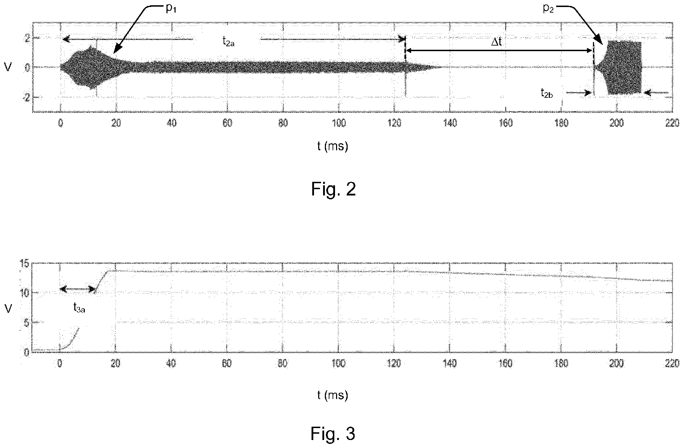

Fig. 1 is a schematic illustration of a sealing system 100 for sealing a packaging material in a packaging machine (not shown). The sealing system 100 comprises an independently movable sealing device 101 being movably mounted on a track 102. The sealing system 100 may comprise a plurality of sealing devices 101, 101', each being independently movable along the track 102. The below disclosure applies to any such sealing device 101, 101', in the sealing system 100. Although the track 102 is shown as an elliptic track, it is conceivable that the track 102 may have varying shapes, i.e. extending along a variety of curves with different radiuses of curvatures. The sealing system 100 comprises a controller 103 in communication with the independently movable sealing device 101 to control the position thereof along a path 104 of the track 102. The sealing system 100 comprises a power generator 105 in communication with the sealing device 101 to supply a power signal (p₁) at a frequency for sealing of the packaging material over a power communication line 106. Fig. 2 is a diagram showing an example of such power signal (p₁), at a certain frequency and amplitude, being supplied to the sealing device 101 from the power generator 105 over the power communication line 106. The power signal (p₁) from an AC power supply may drive a piezoelectric element at a suitable frequency for generating mechanical vibrations in ultrasonic sealing applications, i.e. in case of having a sealing device 101 based on ultrasonic sealing. Alternatively, the power signal (p₁) may be supplied to an induction coil of the sealing device 101 where the supplied AC power induces eddy currents in a metal layer of a packaging material, so that the packaging material is heated and can be sealed together.

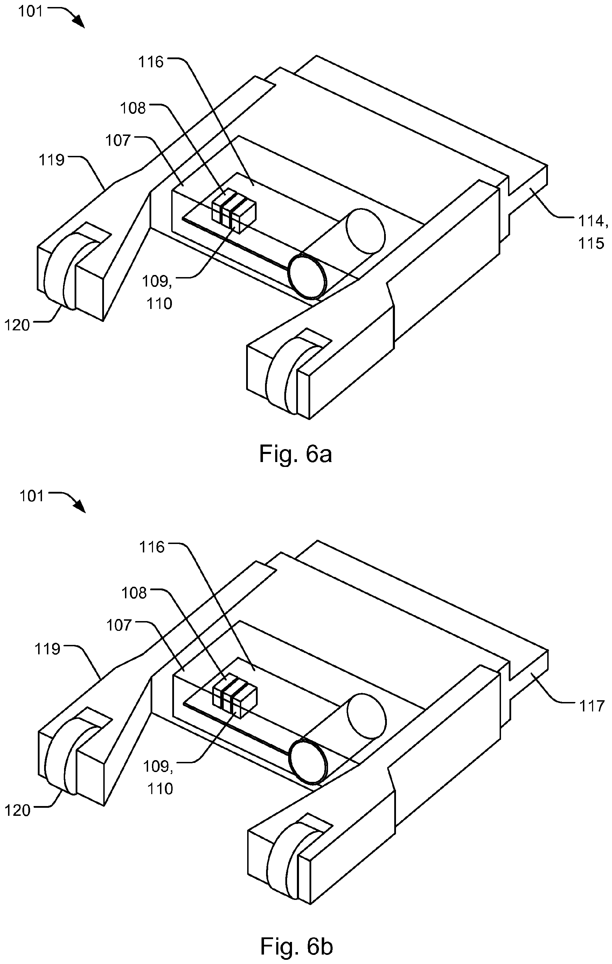

The sealing device 101 furher comprises a housing 107 and a detection device 108 arranged in the housing 107. The housing 107 and detection device 108 are schematically indicated in Fig. 1, and Figs. 6a-b show examples of such housings 107 as well as detection devices 108. It should be understood that Figs. 6a-b are only examples, and that the housing 107 of the sealing device 101 may take various forms, as well as the position of the detection device 108, will still providing for the advantageous benefits as described below. The sealing device 100 may comprise a frame 119, as schematically illustrated in the examples of Figs. 6a-b. The housing 107 may be attached to the frame 119, and the sealing device 101 may comprise a track guide 120 configured to engage with a track 102 so that the sealing device 101 is movable along the track 102. The track guide 120 may comprise rollers arranged at opposite sides of the frame 119 to engage with the track 102.

The detection device 108 is configured to register detection data or sensor data of an environment in the housing 107. Alternatively or in addition, the detection device 108 is configured to register detection data or sensor data of sealing parameters associated with the sealing process of the packaging material. The sealing device 101 comprises a transmitter 109 connected to the detection device 108. The transmitter comprises an encoder 110 to convert the detection data or sensor data to at least one frequency pulse (p₂). Fig. 2 shows a diagram with an example of such frequency pulse (p₂). For example, in case the detection data comprises digital data, the encoder 110 may be configured to encode data bits into defined frequencies which are contained in the frequency pulse (p₂). In case the detection data comprises analog signals, the encoder 110 may be configured to encode the analog data into such defined frequencies, where the define frequencies may be associated with defined signal characteristics of the detection data, regardless of the type of detection data. The transmitter 109 is configured to communicate the at least one frequency pulse (p₂) as a detection signal to a receiver 111 over the power communication line 106. The receiver 111 and power communication line 106, which also supplies power to the sealing device 101, are schematically shown in Fig. 1. The example of Fig. 2, showing the signals communicated over the power communication line 106, illustrates that both the power signal (p₁) and the at least one frequency pulse (p₂) are transmitted over the power communication line 106. The sealing system 100 comprises a control monitor 112 connected to the receiver 111 to monitor the detection signal received from the sealing device 101 over the power communication line 106, at positions of the sealing device 101 along the path 104. Converting detected data of the environment in the sealing device 101, and/or of its associated sealing parameters, to at least one frequency pulse (p₂) which is communicated over the power communications line 106, over which the sealing device 101 is powered, provides for a facilitated real-time condition monitoring of the sealing device 101 when being independently movable along the track 102 of a conveyor system. Thus, it is not necessary to implement new communication paths to the sealing device 101 for monitoring the status thereof, which is a complex task due to the sealing device 101 being independently movable along the track 102. Facilitated real-time monitoring of the sealing device 101 is thus provided while minimizing the impact on the production line in which the independently movable sealing device 101 is utilized. This provides for improved condition monitoring of the sealing process and of the sealing device 101 itself. Maintenance is thus also facilitated, and the risk of performance loss in the production line can be minimized.

As mentioned, the sealing device 101 may comprise and ultrasonic sealing device 101. In one example, the transmitter 109 of the sealing device 101 is powered by a fraction of the power supplied as an ultrasonic sealing pulse for sealing the packaging material. The ultrasonic sealing pulse thus corresponds to the aforementioned power signal (p₁) being supplied by the power generator 105. By using a fraction of the ultrasonic sealing pulse to power the transmitter 109, the need for any additional power supply can be dispensed with, which provides for further improving and facilitating the implementation of condition monitoring of the independently movable sealing device 101. Further, the detection device 108 and the encoder 110 may be powered by a fraction of the power supplied as an ultrasonic sealing pulse. Fig. 3 shows an example diagram indicating the power supplied to the transmitter 109 of the sealing device 101. The example of Fig. 3 shows a delay t₃ₐ when comparing to the timing of the power signal (p₁) in Fig. 2, before the voltage to the transmitter 109 reaches a steady value. It should be understood that the timing between the power signal (p₁) and such steady state voltage supply to the transmitter 109 may vary with different applications. The fraction of the power drawn from the ultrasonic sealing pulse may be minimal, such as 0.01%, in order for the ultrasonic sealing not to be affected. The power consumption of the transmitter 109 may be optimized and minimized so that such small fraction is sufficient for the powering thereof.

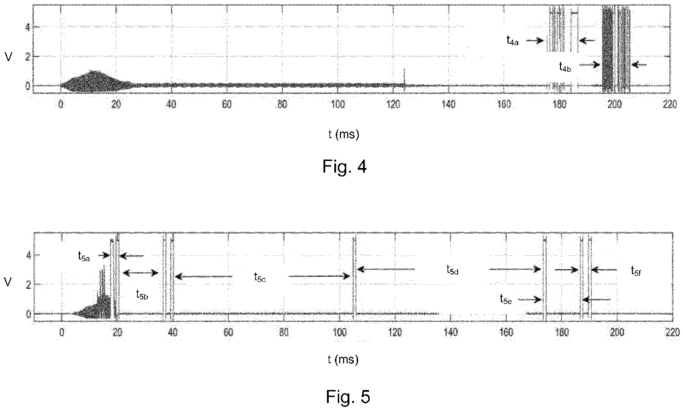

The detection device 108 may comprise a temperature sensor, and/or a humidity sensor, and/or a motion sensor, and/or a sensor for registering electrical characteristics. Hence, various characteristics of the sealing process, including the status of the sealing device 101 itself, can be monitored in the sealing system 100. Any of the detected or measured characteristics can be input to a control unit of the packaging machine as a feedback to vary any of the associated production parameters. For example, in case of having an inductive sealing device 101, the electrical characteristics of the induction circuit, established when inducing a current in the metal of a packaging material, such as an impedance of the circuit, may be measured and monitored in real-time, for immediate feedback on the power control of the power generator 105. Similar feedback and control can be provided for an ultrasonic sealing device 101. In some examples, the temperature and the humidity inside the housing 107 of the sealing device 101 is measured. The sensor data is transmitted over the power communication line 106 as described above, and monitored with the control monitor 112. Actions can then be taken in case of deviations outside defined temperature and/or humidity levels. Fig. 5 is example diagram showing recorded waveforms of associated events when registering and transmitting detection data from the sealing device 101. The first indicated time period (t₅ₐ) may correspond to the startup phase of a processor (not shown) of the sealing device 101 being in communication with, and controlling, the transmitter 109, detection device 108 and encoder 110. The second time period (t_{5b}) may correspond to the startup time of the detection device or sensor 108. The third time period (t_{5c}) may correspond to a first measurement, such as a temperature measurement inside the housing 107, and the fourth time period (t_{5d}) may correspond to a second measurement, such as a measurement of the humidity inside the housing 107. The fifth time period (t₅ₑ) may correspond to the registering and setup of the communication line between the transmitter 109 and the receiver 111. Fig. 4 is a diagram showing an example of data transmission over such communication line, where the time period t₄ₐ may correspond to a period, during the setup of the communication line, where the detection data is registered in the transmitter 109 before transmission. Turning again to Fig. 5, the sixth time period (t_{5f}) may correspond to a verification process of the communication line and the data to be transmitted. The second time period (t_{4b}) in Fig. 4 may correspond to the detection data being transmitted to the receiver 111.

As mentioned, the sealing device 101 may comprise an ultrasonic sealing device, in which case it comprises a sonotrode 114, as schematically indicated in Fig, 6a. The sonotrode 114 comprises a piezoelectric transducer 115 to generate ultrasonic acoustic vibrations for sealing a packaging material. The ultrasonic sealing device 101 comprises a power circuit 116 connected to the piezoelectric transducer 115, and the power circuit 116 may be enclosed in the housing 107. The aforementioned detection device or sensor 108 may thus be arranged in the housing 107 to detect moisture and/or the temperature in the atmosphere inside the housing 107. This provides for a facilitated monitoring of the humidity level inside the housing 107 and reduced risk of component damage since the power circuit 116 connected to the piezoelectric transducer 115 is a high-voltage circuit typically requiring a defined operating range in terms of the humidity level.

In case the sealing device 101 comprises an induction sealing device 101, it comprises an inductor 117 for inductive sealing of the packaging material, as schematically indicated in Fig. 6b. The detection device 108 may comprise a sensor for registering electromagnetic characteristics of the inductive sealing process, such as the impedance of the inductive sealing circuit as elucidated above.

The receiver 111 may be a stationary receiver 111 in the sealing system 100. Thus, the sealing device 101 may be movable relative to the stationary receiver 111. Receiving the at least one frequency pulse (p₂) over the power communication line 106 allows for the receiver 111 to be non-movable while still receiving the detection signal from the sealing device 101.

The receiver 111 may comprise a decoder 113 for converting the at least one frequency pulse (p₂) to digital detection data for communication to the control monitor 112. The decoder may comprise an analog to digital converter for such purpose. The monitoring of the detection signal may thus be adapted to any application and/or to any characteristic to be monitored by the control monitor 112.

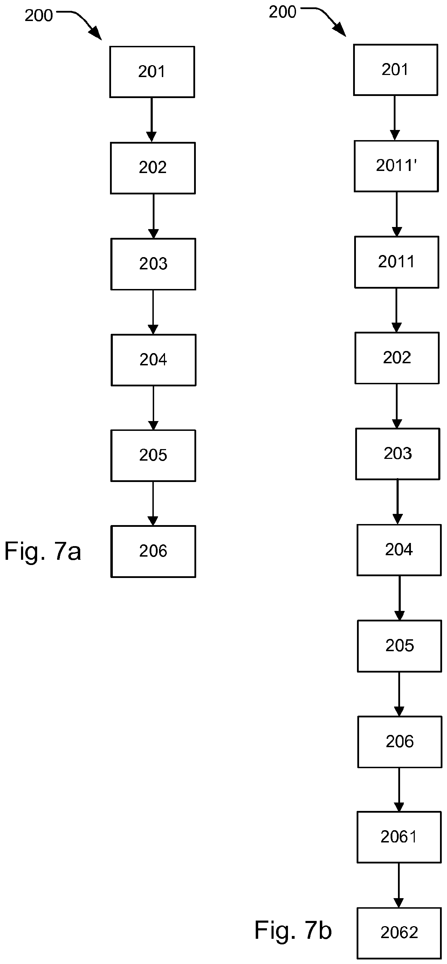

Fig. 7a is a flowchart of a method 200 in a sealing system 100. As described above, the system 100 comprises an independently movable sealing device 101 for sealing a packaging material. The sealing device 101 may be movably mounted on a track 102. The method 200 comprises supplying 201 a power signal (p₁) to the sealing device 101 at a frequency for said sealing over a power communication line 106, registering 202 detection data of the sealing device 101, converting 203 the detection data to at least one frequency pulse (p₂), and transmitting 204 the at least one frequency pulse (p₂) as a detection signal over the power communication line 106. The method 200 comprises receiving 205 the at least one frequency pulse (p₂), and monitoring 206 the detection signal received from the sealing device 101 over the power communication line 106 at positions of the sealing device 101 along the path 104. The method 200 thus provides for the advantageous benefits as described above in relation to the sealing system 100 and Figs. 1 - 6. The method 200 provides for a facilitated real-time condition monitoring of a sealing device 101 when being independently movable along a track 102 in a production line.

Fig. 7b is another flowchart of a method 200 in a sealing system 100. The transmission of the at least one frequency pulse (p₂) as a detection signal over the power communication line 106 may be delayed 2011 with a time interval (Δt) from the supplying of the power signal (p₁). Fig. 2 illustrates an example where the at least one frequency pulse (p₂) is transmitted with the time delay (Δt) from the supplying of the power signal (p₁). The duration of the power signal (p₁) and the at least one frequency pulse (p₂) is indicated with respective time periods t₂ₐ and t_{2b}. Having the aforementioned time delay (Δt) provides for minimizing the risk of disturbances on the transmitted detection data by the power signal (p₁). A more accurate and reliable monitoring of the sealing device 101 may thus be provided.

The method 200 may comprise comparing 2061 the detection signal with determined threshold values thereof to monitor a condition of the sealing device 101. Hence, different threshold values may be defined which define e.g. acceptable operating conditions of the sealing device 101. Such threshold values may be defined for various characteristics of the sealing device 101, the sealing process, or the environmental conditions, e.g. temperature, humidity. A user may be notified in case the measured characteristics obtained by the detection signal exceeds a defined threshold. Further, a controller (not shown) of the sealing system 100 may be configured to compare the detection signal with determined threshold values and send modified control instructions to e.g. the sealing device 101 based on the comparison.

Thus, the method 200 may comprise monitoring 2062 humidity and/or temperature in a housing 107 of the sealing device 101 based on the detection signal.

As mentioned, the sealing device 101 may comprise and ultrasonic sealing device 101. The method 200 may comprise powering 2011' the transmitter 109 with a fraction of the power supplied as an ultrasonic sealing pulse to the sealing device 101.

A computer program product is provided comprising instructions which, when the program is executed by a computer, cause the computer to carry out the steps of the method 200 as described above.

A packaging machine (not shown) is provided comprising an sealing system 100 as described above in relation to Figs. 1 - 6. Alternatively or in addition, the packaging machine executes the method 200 as described above. The packaging machine thus provides for the advantageous benefits as described above in relation to the sealing system 100 and the method 200.

From the description above follows that, although various embodiments of the invention have been described and shown, the invention is not restricted thereto, but may also be embodied in other ways within the scope of the subject-matter defined in the following claims.

## Claims

1. A sealing system (100) for sealing a packaging material in a packaging machine, comprising
an independently movable sealing device (101) being movably mounted on a track (102),
a controller (103) in communication with the independently movable sealing device (101) to control the position thereof along a path (104) of the track (102),
a power generator (105) in communication with the sealing device (101) to supply a power signal (p₁) at a frequency for said sealing over a power communication line (106),
wherein the sealing device (101) comprises
a housing (107),
a detection device (108) arranged in the housing (107) to register detection data of an environment therein and/or of sealing parameters associated with said sealing, and
a transmitter (109) connected to the detection device (108), the transmitter comprising an encoder (110) to convert the detection data to at least one frequency pulse (p₂), whereby the transmitter (109) communicates the at least one frequency pulse as a detection signal to a receiver (111) over the power communication line (106), and
a control monitor (112) connected to the receiver (111) to monitor the detection signal received from the sealing device (101) over the power communication line (106) at positions of the sealing device (101) along the path (104).

2. A system according to claim 1, wherein the sealing device comprises and ultrasonic sealing device, wherein the transmitter (109) (and detection device) is powered by a fraction of the power supplied as an ultrasonic sealing pulse for said sealing.

3. A system according to claim 1 or 2, wherein the detection device (108) comprises a temperature sensor, and/or a humidity sensor, and/or a motion sensor, and/or a sensor for registering electrical characteristics.

4. A system according to any of claims 1 - 3, wherein the sealing device (101) comprises
a sonotrode (114), the sonotrode comprising a piezoelectric transducer (115) to generate ultrasonic acoustic vibrations for sealing said packaging material,
a power circuit (116) connected to the piezoelectric transducer (115), wherein the power circuit (116) is enclosed in the housing (107), and
wherein the detection device (108) is arranged in the housing (107) to detect moisture and/or temperature in an atmosphere inside the housing (107).

5. A system according to any of claims 1 - 4, wherein the sealing device comprises an inductor (117) for inductive sealing of the packaging material, wherein the detection device (108) comprises a sensor for registering electromagnetic characteristics of said inductive sealing.

6. A system according to any of claims 1 - 5, wherein the receiver (111) is a stationary receiver in the sealing system, whereby the sealing device (101) is movable relative to the stationary receiver (111).

7. A system according to any of claims 1 - 6, wherein the receiver (111) comprises a decoder (113) for converting the at least one frequency pulse (p₂) to digital detection data for communication to the control monitor (112).

8. A method (200) in a sealing system (100), the system comprising an independently movable sealing device (101) for sealing a packaging material and being movably mounted on a track (102), the method comprising
supplying (201) a power signal (p₁) to the sealing device (101) at a frequency for said sealing over a power communication line (106),
registering (202) detection data of the sealing device (101),
converting (203) the detection data to at least one frequency pulse (p₂),
transmitting (204) the at least one frequency pulse as a detection signal over the power communication line (106),
receiving (205) the at least one frequency pulse (p₂), and
monitoring (206) the detection signal received from the sealing device (101) over the power communication line (106) at positions of the sealing device (101) along the path (104).

9. Method according to claim 8, wherein the transmitting of the at least one frequency pulse (p₂) as a detection signal over the power communication line (106) is delayed (2011) with a time interval (Δt) from the supplying of the power signal (p₁).

10. Method according to claim 8 or 9, comprising
comparing (2061) the detection signal with determined threshold values thereof to monitor a condition of the sealing device (101).

11. Method according to claim 10, comprising monitoring (2062) humidity and/or temperature in a housing (107) of the sealing device (101) based on the detection signal.

12. Method according to any of claims 8 - 11, wherein the sealing device (101) comprises and ultrasonic sealing device, wherein the method comprises
powering (2011') the transmitter (109) (or detection device) with a fraction of the power supplied as an ultrasonic sealing pulse to the sealing device (101).

13. A computer program product comprising instructions which, when the program is executed by a computer, cause the computer to carry out the steps of the method according to any of claims 8 - 12.

14. A packaging machine comprising a sealing system (100) according to any of claims 1 - 7, and/or performing the method (200) according to any of claims 8 - 12.
